**Europäisches Patentamt**

**European Patent Office**

**Office européen des brevets**

(19)

(11) Veröffentlichungsnummer: **0 177 789**
**B1**

(12) # EUROPÄISCHE PATENTSCHRIFT

(45) Veröffentlichungstag der Patentschrift:
**26.10.88**

(51) Int. Cl.⁴: **C 07 F 7/22, A 01 N 55/04**

(21) Anmeldenummer: **85111472.8**

(22) Anmeldetag: **11.09.85**

(54) **Tris-(triorganozinn)ester der trimeren Fettsäure.**

(30) Priorität: **11.10.84 DE 3437316**

(43) Veröffentlichungstag der Anmeldung:
**16.04.86 Patentblatt 86/16**

(45) Bekanntmachung des Hinweises auf die Patenterteilung:
**26.10.88 Patentblatt 88/43**

(84) Benannte Vertragsstaaten:
**BE DE FR GB NL SE**

(56) Entgegenhaltungen:
**DE - A - 2 047 654**
**US - A - 3 167 473**
**US - A - 3 214 453**
**US - A - 4 039 494**

(73) Patentinhaber: **SCHERING AKTIENGESELLSCHAFT**
**Berlin und Bergkamen, Waldstrasse 14 Postfach 15 40,**
**D-4709 Bergkamen (DE)**

(72) Erfinder: **Landsiedel, Horst, Auf dem Spitt 34,**
**D-5758 Fröndenberg (DE)**
Erfinder: **Plum, Hans, Dr. Dipl.-Chem., Sulkshege 12,**
**D-4700 Hamm (DE)**

## Beschreibung

Es ist bekannt, dass Triorganozinnverbindungen eine gute biozide Wirkung aufweisen. Diese erstreckt sich auf Bakterien, Pilze, Algen und bestimmte Meeresorganismen wie Balaniden und Röhrenwürmer.

Die biozide Wirkung der Triorganozinnverbindungen vom Typ $R_3SnX$, worin R einen Alkyl-, Cyclohexyl- oder Phenylrest und X einen anionischen Rest darstellt, wird in erster Linie von der Kettenlänge der am Zinn gebundenen Kohlenwasserstoffreste bestimmt (International Tin Research Institute, Veröffentlichung Nr. 599, 1979; Dr. Bokranz, Dr. Plum, Fortschritte der chemischen Forschung, Bd. 16, Heft 3/4, S. 377). Das Wirkungsoptimum wird dann erreicht, wenn in den Alkylzinnverbindungen die Gesamtzahl der am Zinn gebundenen C-Atome 9–12 beträgt, d.h. bei Tripropyl- und Tributylzinnverbindungen. Eine ähnlich gute biozide Wirkung weisen die Triphenyl- und Tricyclohexylzinnverbindungen auf.

Der anionische Rest X hat im allgemeinen keinen Einfluss auf die biozide Wirkung der Triorganozinnverbindungen.

Massgebend für die Wirksamkeit ist der Trialkylzinngehalt. So müssen von Tributylestern langkettiger Säuren, z.B. Tributylzinnaphthenat oder Tributylzinnlinoleat, die etwa nur den halben Sn-Gehalt des Tributylzinnoxids (TBTO) aufweisen, zur Erreichung der gleichen bioziden Wirkung ca. die doppelten Mengen wie von TBTO aufgewendet werden.

Der anionische Rest X beeinflusst dagegen die physikalischen Daten der Triorganozinnverbindungen. So sind z.B. Tributylzinnoxid und Tributylzinnchlorid niedrigviskose Flüssigkeiten, Tributylzinnabietat und Tributylzinnphosphat mittel- bis hochviskose Flüssigkeiten und Tributylzinnfluorid ein fester Stoff. Die für den Materialschutz am meisten verwendete Triorganozinnverbindung ist das Tri-n-butylzinnoxid. Wird der Sauerstoff in dieser Verbindung durch andere anionische Gruppen (z.B. Säurereste von organischen oder anorganischen Säuren) ersetzt, werden in der Regel Produkte mit niedrigerer Wasserlöslichkeit, geringerer Flüchtigkeit und höherer thermischer Beständigkeit erhalten.

So zeigen z.B. Tributylzinnaphthenat (TBTN) bzw. Tributylzinnlinoleat (TBTL) gegenüber dem Tributylzinnoxid in dieser Hinsicht deutlich bessere Daten.

Ziel der vorliegenden Erfindung ist somit, Triorganozinnverbindungen bereitzustellen, die in Bezug auf Wasserlöslichkeit, Verdampfungsverlust und thermische Stabilität wesentlich bessere Daten aufweisen als die bereits technisch verwendeten Tributylzinnester der Naphthensäure bzw. Leinölfettsäure («Untersuchungen zur Flüchtigkeit von Tributylzinn-Verbindungen», H. Landsiedel, H. Plum; Holz als Roh- und Werkstoff 39 (1981), Seiten 261–264, Springer-Verlag).

Es wurde überraschend gefunden, dass die Tris-triorganozinnester der trimeren Fettsäuren wesentliche Verbesserungen in diesen Eigenschaften aufweisen, die gerade hinsichtlich der Eignung für den Einsatz als biozider Wirkstoff massgeblich sind.

Gegenstand der Erfindung sind Tris-(triorganozinn)ester trimerer durch Polymerisation von ungesättigten natürlich oder synthetischen einbasischen aliphatischen Säuren mit 16–22 Kohlenstoffatomen erhältlicher Fettsäuren, in denen die an das Zinn gebundenen organischen Reste gleiche oder verschiedene Reste aus der Gruppe geradkettige oder verzweigte Alkylreste mit 3–6 C-Atomen, Cyclohexyl- und Phenylreste sind.

Bevorzugt sind dabei die Tris-tributylzinnester der trimeren Fettsäuren, insbesondere der aus Fettsäuren mit 18 C-Atomen, wie der Tallölfettsäure, erhaltenen trimeren Fettsäuren.

Die Erfindung betrifft ferner biozide Mittel, die diese Verbindungen als aktive Komponente enthalten, sowie die Verwendung dieser Mittel zur Bekämpfung von Bakterien, Pilzen, Algen und Unterwasserbewuchs-Organismen, insbesondere von holzschädigenden Organismen.

Unter «trimeren Fettsäuren» versteht man die bei bekannten Verfahren (DE-OS 14 43 938, DE-OS 14 43 968, DE-PS 21 18 702 und DE-PS 12 80 852) der Polymerisation von ungesättigten natürlichen oder synthetischen einbasischen aliphatischen Fettsäuren mit 16–22 Kohlenstoffatomen, bevorzugt 18 C-Atomen, im Alkylrest anfallenden höhermolekularen Fraktionen. Geeignete Fettsäuren sind unter anderem natürliche höhere Fettsäuren wie Linolsäure, Ölsäure, Stearinsäure, Sojaölfettsäure und insbesondere Tallölfettsäure. Diese bestehen im wesentlichen aus trimerisierten Säuren in Form von verschiedenen Isomeren, geringeren Mengen Dicarbonsäuren und oligomeren Fettsäuren sowie Spuren von Monocarbonsäuren.

Die Zusammensetzung von «trimeren Säuren» ist bekanntlich von einer Reihe von Faktoren abhängig, wie Art und Zusammensetzung der Ausgangsfettsäure, den Reaktionsbedingungen, dem Katalysatortyp und den Destillationsbedingungen beim Abtrennen der dimeren Säure (Leonard, E.C., «The Dimer Acids», Humko Sheffield Chemicals, Connecticut, 1975).

Die bei der technischen Herstellung von dimerer Fettsäure anfallende «trimere Fettsäure» weist – nach Abdestillation der Dimersäure – Gehalte an trimeren bzw. oligomeren Säuren zwischen ca. 70 und 90 Gew.-% auf.

Von den in der Praxis verwendeten Bioziden für den Materialschutz werden neben einer guten Wirkung gegen verschiedene Mikroorganismen auch ein lang anhaltender Schutz gegen den Befall erwartet.

Die Dauerhaftigkeit des Materialschutzes wird durch mehrere Faktoren beeinflusst. So kann z.B. eine gewisse Löslichkeit des Biozids in Wasser sich recht nachteilig auf den Dauerschutz auswirken, indem eine Auslaugung des behandelten Materials durch Feuchtigkeitsbelastung – z.B. Regen oder Tauwasser – stattfindet und so die Konzentration an bioziden Wirkstoffen verringert wird. Die erfindungsgemässen Tris-(tributylzinn)ester der trimeren Fettsäure weisen gegenüber den bisher bekannten Tributylzinnestern etwa nur ein Viertel der Wasserlöslichkeit auf (s. Tabelle 1).

Ein wesentlicher Faktor für die Dauerhaftigkeit der bioziden Wirkung ist die thermische Stabilität der Wirkstoffe. Biozid ausgerüstete Materialien, die der Witterung ausgesetzt sind, können sich bei Sonneneinstrahlung über längere Zeit auf Temperaturen von 60 bis 70 °C aufheizen, z.B. dunkelgebeiztes Holz.

Thermisch nicht beständige Produkte werden bei derartigen Belastungen abgebaut und verlieren dadurch ihre biozide Wirkung. Tris-(tributylzinn)ester der trimeren Fettsäure zeigen gegenüber bisher verwendeten Tributylzinnestern überraschenderweise eine signifikant bessere thermische Stabilität, wie in Tabelle 2 gezeigt wird.

Neben der thermischen Stabilität ist bei Temperaturbelastungen auch das Abdampfverhalten von bioziden Produkten für den Langzeitschutz von Bedeutung. Hohe Abgaberaten von Bioziden aus behandelten Materialien können eine nicht vertretbare Umweltbelastung darstellen sowie die Langzeitwirkung verringern.

In dieser Hinsicht zeigen die erfindungsgemässen Tris-(tributylzinn)ester der trimeren Fettsäure sehr günstige Eigenschaften. Die Abdampfraten bei einer Belastung von 7 Tagen bei +65 °C betragen nur etwa 15–20% der Werte der bisher verwendeten Tributylzinnester (s. Tabelle 3).

Gegenüber den bisher eingesetzten Tributylzinnverbindungen zeigen Versuche mit der Thermowaage für Tris-(tributylzinn)ester der trimeren Fettsäure einen wesentlich späteren Beginn als auch einen niedrigeren Wert des Gewichtsverlustes (s. Tabelle 3).

Somit kann bei Einsatz von bioziden Mitteln mit den erfindungsgemässen Tris-(triorganozinn)-estern der trimeren Fettsäuren durch verringerte Abgaberaten sowie durch eine – aufgrund der Langzeitstabilität mögliche – verringerte Einsatzkonzentration an Bioziden die Umweltbelastung reduziert werden.

So werden mit den erfindungsgemässen Verbindungen als Wirkstoff in Anstrichen auf Holz gegenüber Anstrichen mit bisher verwendeten Tributylzinnestern geringere Konzentrationen in der Luft über dem behandelten Holz erhalten (Tabelle 4).

Ein weiterer Vorteil der erfindungsgemässen Verbindungen gegenüber bekannten Tributylzinnverbindungen zeigt sich in einer geringeren Hautreizung.

Die erfindungsgemässen Verbindungen lassen sich insbesondere für den Holzschutz einsetzen, da hierdurch neben der Verhinderung des Abbaus durch holzzerstörende Pilze auch ein Schutz gegen holzverfärbende Pilze und Bakterienbefall erreicht wird. Bakterien bewirken keinen Abbau des Holzes, können aber einen Angriff durch Pilze begünstigen.

Die erfindungsgemässen Verbindungen werden in Form von Lösungen, gegebenenfalls mit Farb- und Hilfsstoffen, in das Holz durch Streichen, Spritzen, Sprühen oder Tauchen eingebracht.

Des weiteren lassen sich die erfindungsgemässen Wirkstoffe für die biozide Ausrüstung von Textilien, Kunststoffen und Baustoffen und Anstrichsystemen einsetzen, wobei sie zweckmässig in Form von Zubereitungen wie Lösungen, Emulsionen, Dispersionen mit und ohne Bindemittel oder mit festen Trägerstoffen bzw. Verdünnungsmitteln und gegebenenfalls mit Zusatz von Netz-, Haft-, Emulgier- und Dispergierhilfsmitteln angewandt werden.

Die Wirkstoffkonzentrationen liegen im allgemeinen im Bereich von 0,05 bis 50 Gew.-% und werden durch die Anforderungen der Anwendung und die Aufnahmefähigkeit der Substrate bestimmt.

Für den Holzschutz werden bevorzugt Lösungen der erfindungsgemässen Verbindungen in Benzinfraktionen, gegebenenfalls mit Zusatz von Penetrationsfördermitteln, Bindemitteln, insbesondere Alkydharzen, oder anderen Lösungsmitteln, in Konzentrationen von 0,05 bis 5 Gew.-% verwendet und in Mengen von 50 bis 400 g Wirkstofflösung je $m^2$ Holzoberfläche durch Streichen, Spritzen und dergleichen aufgebracht.

Mit den erfindungsgemässen Verbindungen lassen sich bei Verwendung geeigneter Emulgatoren auch wasserverdünnbare Formulierungen erstellen, die ebenfalls für den Holzschutz eingesetzt werden können, z.B. durch Streichen, Tauchen usw. mit Emulsionen, die 0,5 bis 3% Wirkstoff enthalten. Zum Schutz von Holzwerkstoffen können die erfindungsgemässen Verbindungen in Form von hochkonzentrierten Lösungen bzw. Formulierungen mit Emulgatoren dem Bindemittel oder Klebstoff in Mengen von 0,1 bis 2 Gew.-%, bezogen auf Wirkstoff, zugesetzt werden.

Emulgierbare Konzentrate können z.B. durch Auflösen des Wirkstoffes in einem inerten organischen Lösungsmittel, z.B. Alkohole, Ketone, Cyclohexanon, Xylol oder auch höhersiedenden Aromaten oder Kohlenwasserstoffen, wie Benzinfraktionen, unter Zusatz von einem oder mehreren Emulgatoren hergestellt werden. Bei flüssigen Wirkstoffen kann der Lösungsmittelanteil auch ganz oder teilweise entfallen.

Geeignete Emulgatoren sind beispielsweise Alkylarylsulfonate, z.B. Ca-dodecylbenzolsulfonat, und insbesondere nichtionogene Emulgatoren wie Fettsäurepolyglykolester, Alkylarylpolyglykolether, Fettalkoholpolyglykolether, Propylenoxid-Ethylenoxid-Kondensationsprodukte, Alkylpolyglykolether.

Zum Schutz von Textilien, z.B. Baumwollgeweben, gegen unerwünschte Mikroorganismen, lassen sich die Verbindungen aus Lösungen, z.B. in Äthanol, Xylol, Ketonen mit Wirkstoffkonzentrationen von 0,05 bis 3 Gew.-% mittels Sprühen oder Tränken aufbringen, wobei eventuell Hydrophobierungsmittel zugesetzt werden können.

Zur Verbreiterung des Wirkungsspektrums, zur Erzielung besonderer Wirkung gegen spezielle Mikroorganismen – oder zur insektiziden Ausrüstung lassen sich die erfindungsgemässen Verbindungen mit anderen Wirkstoffen kombinieren, z.B. sind hierzu geeignet:

3-Jod-2-propynyl-butyl-carbamat,
Kupfernaphthenat,
Kupfer-8-oxychinolin,
N-Cyclohexyl-N-methoxy-2,5-dimethyl-furan-3-carbonsäureamid,
N,N'-Dimethyl-N'-phenyl-N'-fluordichlormethyl-thio- sulfonyldiamid,
Benzimidazol-2-carbaminsäure-methylester,
N-Trichlormethylthio-phthalimid,
γ-Hexachlorcyclohexan,
Permethrin.

Die Umsetzung der «trimeren Fettsäure» mit der der Säurezahl äquivalenten Menge Triorganozinnverbindung geschieht nach folgendem Schema:

Herstellungsbeispiele

Beispiel 1

Herstellung von Tris-(tributylzinn)ester der trimeren Fettsäure:

570,7 g  trimere Fettsäure, erhalten aus der Polymerisation von Tallölfettsäure, mit einer Säurezahl von 197 und einem Gehalt an trimeren bzw. oligomeren Fettsäuren von 72 Gew.-%
598,0 g  TBTO
1178,0 g  Xylol.

Die Komponenten werden bis zum Siedepunkt des Xylols erhitzt und dabei gleichzeitig über eine Brücke das Wasser azeotrop abdestilliert. Die Xylolmenge wird so bemessen, dass man eine 50 Gew.-%ige Lösung des Tributylzinnesters der trimeren Fettsäure erhält. (Das 100%ige Produkt ist sehr hochviskos und schlecht zu handhaben). Durch Messung der entstehenden Wassermenge wird der vollständige Umsatz kontrolliert. Das Produkt stellt eine gelb gefärbte, klare Lösung dar mit einem Sn-Gehalt von 9,8 Gew.-%; das entspricht einem Sn-Gehalt von 19,6 Gew.-% für das 100%ige Produkt.

Beispiel 2

Herstellung von Tris-(tributylzinn)ester der trimeren Fettsäure:

604,0 g  trimere Fettsäure, erhalten aus der Polymerisation von Tallölfettsäure, mit einer Säurezahl von 186 und einem Gehalt an trimeren bzw. oligomeren Fettsäuren von 87 Gew.-%
598,0 g  TBTO
1211,0 g  Xylol.

Verfahren wie Beispiel 1. Man erhält eine gelb gefärbte, klare Lösung mit einem Sn-Gehalt von 9,3 Gew.-%; das entspricht einem Sn-Gehalt von 18,6 Gew.-% für das 100%ige Produkt.

Beispiel 3

Herstellung von Tris-(tripropylzinn)ester der trimeren Fettsäure:

590,0 g  trimere Fettsäure, erhalten aus der Polymerisation von Tallölfettsäure, mit einer Säurezahl von 190 und einem Gehalt an trimeren bzw. oligomeren Fettsäuren von 84%
512,0 g  Tripropylzinnoxid
1111,0 g  Xylol.

Verfahren wie Beispiel 1. Man erhält eine gelb gefärbte, klare Lösung mit einem Sn-Gehalt von 10,6 Gew.-%; das entspricht einem Sn-Gehalt von 21,2 Gew.-% für das 100%ige Produkt.

Beispiel 4

Herstellung von Tris-(triphenylzinn)ester der trimeren Fettsäure:

590,0 g  trimere Fettsäure, erhalten aus der Polymerisation von Tallölfettsäure, mit einer Säurezahl von 190 und einem Gehalt an trimeren bzw. oligomeren Fettsäuren von 84%
716,0 g  Triphenylzinnoxid
1315,0 g  Xylol.

Verfahren wie Beispiel 1. Man erhält eine gelb gefärbte, klare Lösung mit einem Sn-Gehalt von 8,9 Gew.-%; das entspricht einem Sn-Gehalt von 17,8 Gew.-% für das 100%ige Produkt.

Beispiel 5

Herstellung von Tris-(tricyclohexylzinn)ester der trimeren Fettsäure:

295,0 g  trimere Fettsäure, erhalten aus der Polymerisation von Tallölfettsäure, mit einer Säurezahl von 190 und einem Gehalt an trimeren bzw. oligomeren Fettsäuren von 84%
385,0 g  Tricyclohexylzinnhydroxid
690,0 g  Xylol.

Verfahren wie Beispiel 1. Man erhält eine gelb gefärbte, klare Lösung mit einem Sn-Gehalt von 8,7%; das entspricht einem Sn-Gehalt von 17,4 Gew.-% für das 100%ige Produkt.

Von den Produkten aus Beispiel 1 und 2 wurden folgende Daten bestimmt. (Die gefundenen Daten sind denen von TBTO bzw. den TBT-Estern der Napthensäure (TBTN) bzw. der Leinölfettsäure (TBTL) gegenübergestellt).

1. Löslichkeit in Leitungswasser

Jeweils 1 g der zu prüfenden Substanzen wurden in Bechergläsern mit 1 l Leitungswasser 1 Woche gerührt. Nach dem Absetzen wurde abdekantiert und die Wasser gelösten Organozinnverbindungen mit Chloroform extrahiert. Die Sn-Konzentrationen wurden mittels AAS bestimmt.

Tabelle 1

| Produkt | Wasserlöslichkeit mg/l Wasser |
|---------|-------------------------------|
| TBTO | 24 |
| TBTN | 1,5 |
| TBTL | 1,3 |

(Fortsetzung)

Tabelle 1

| Produkt | Wasserlöslichkeit mg/l Wasser |
|---|---|
| Produkt aus Beispiel 1 (bezogen auf 100%) | 0,3 |
| Produkt aus Beispiel 2 (bezogen auf 100%) | 0,3 |

2. Thermische Beständigkeit

Der Gehalt an Tributylzinnverbindungen nach einer Wärmebehandlung von einer Stunde bei +180 °C in offenen Glasgefässen wurde nach vorheriger Methylierung durch GC ermittelt.

Tabelle 2

| Produkt | Tributylzinngehalt nach 1 h bei +180 °C, Gew.-% |
|---|---|
| TBTO | nicht bestimmbar (98% Gew.-Verl.) |

Tabelle 2 (Fortsetzung)

| Produkt | Tributylzinngehalt nach 1 h bei +180 °C, Gew.-% |
|---|---|
| TBTN | 81,7 |
| TBTL | 86,1 |
| Produkt aus Beispiel 1 (bezogen auf 100%) | 92,7 |
| Produkt aus Beispiel 2 (bezogen auf 100%) | 93,2 |

3. Abdampfverhalten

Gewichtsverluste nach einwöchiger Lagerung im Umlufttrockenschrank bei +65 °C und Untersuchungen mit der Thermowaage (Beginn des Gewichtsverlustes, Gewichtsverlust bei +350 °C).

Die Proben (ca. 2 g) in Petrischalen aus Glas ($\emptyset$ ca. 10 cm) genau eingewogen und der Gewichtsverlust nach der Behandlung durch Rückwaage bestimmt.

Tabelle 3

| Produkt | Gew.-Verlust nach 7 Tagen bei +65 °C % | Thermowaage Beginn des Gewichtsverl. °C | Gew.-Verlust bei +350 °C % |
|---|---|---|---|
| TBTO | 27,3 | 75 | 80 |
| TBTN | 1,7 | 140 | 66 |
| TBTL | 1,3 | 130 | 59 |
| Produkt aus Beispiel 1 (bezogen auf 100%) | 0,3 | 175 | 34 |
| Produkt aus Beispiel 2 (bezogen) auf 100%) | 0,2 | 180 | 33 |

4. Abgaberaten

Zur Bestimmung der Abgaberaten aus behandeltem Holz, die in Tabelle 4 aufgeführt sind, wurden Kiefernbretter von 2 cm Dicke einseitig mit den Prüflösungen angestrichen und nach einer Abdunstzeit von 3 Tagen bei Raumtemperatur in einen verschlossenen Kunststoffkasten gelagert, durch den kontinuierlich Luft gesaugt wurde. Die entweichenden Tributylzinnverbindungen wurden in mit Aktivkohle gefüllten Röhrchen absorbiert und in diesen der Sn-Gehalt bestimmt.

Das Kastenvolumen betrug 0,2 m$^3$, die Fläche der angestrichenen Bretter 0,2 m$^2$ und die Luftwechselrate 2 mal/Stunde.

Die Anstrichlösungen enthielten jeweils 10 Gew.-% Alkydharz, gelöst in Kristallöl 60 mit Zusätzen von TBTL, TBTN und den Produkten aus Beispiel 1 und 2 in einer auf den Sn-Gehalt bezogenen gleichen Menge.

Die Sn-Konzentrationen in der Luft nach verschiedenen Zeiten sind in Tabelle 2 aufgeführt. Die einzelnen Prüfzeiträume betrugen 2 Wochen.

Tabelle 4
Sn-Konzentrationen in der Luft über angestrichenen Brettern, µg/m³

| TBT-Verbindung in der Lösung | Zeiten nach dem Anstrich | | |
|---|---|---|---|
| | 2 Wochen | 14 Wochen | 26 Wochen |
| 3,0 Gew.-% TBTN | 2,02 | 0,55 | 0,44 |
| 3,0 Gew.-% TBTL | 1,84 | 0,49 | 0,41 |
| 6,5 Gew.-% Produkt aus Beispiel 1 | 1,04 | 0,28 | 0,22 |
| 6,6 Gew.-% Produkt aus Beispiel 2 | 0,98 | 0,26 | 0,21 |

5. Biozide Wirksamkeit

Zum Vergleich der Wirksamkeit (Tabelle 5) wurden Papierrundfilter (∅ 5,5 cm) in abgestuften Konzentrationen der Wirkstoffe in Äthanol getränkt, an der Luft getrocknet und danach in Petrischalen auf Nähragar, der mit Bakteriensuspension bzw. Sporensuspensionen von Prüfpilzen beimpft war, gelegt und 2 Tage bei +37 °C (Bakterien) bzw. 3 Wochen bei +30 °C (Pilze) bebrütet. Danach wurden die Hemmzonen um die Proben in cm² bestimmt.

Die biozide Wirksamkeit dieser Produkte ist, bezogen auf den Sn-Gehalt, gleich den TBT-Estern der Naphthensäure (TBTN) bzw. Leinölfettsäure (TBTL).

Tabelle 5

| Tränklösung | Hemmzonen um die Proben in cm² | | Pilze | | | |
|---|---|---|---|---|---|---|
| | ≙ Gew.-% Sn | Lenz. trab. | Con. put. | Polyst. vers. | Por. mont. | Chaet. glob. |
| 2,0 Gew.-% TBTL | 0,40 | 14 | 14 | 8 | 18 | 16 |
| 1,2 Gew.-% TBTL | 0,24 | 12 | 14 | 5 | 12 | 16 |
| 0,8 Gew.-% TBTL | 0,16 | 12 | 10 | 4 | 8 | 12 |
| 0,5 Gew.-% TBTL | 0,10 | 7 | 6 | 3 | 6 | 10 |
| 2,0 Gew.-% TBTN | 0,40 | 14 | 14 | 8 | 16 | 18 |
| 1,2 Gew.-% TBTN | 0,24 | 14 | 12 | 5 | 10 | 16 |
| 0.8 Gew.-% TBTN | 0,16 | 12 | 10 | 5 | 10 | 12 |
| 0,5 Gew.-% TBTN | 0,10 | 8 | 6 | 3 | 6 | 10 |
| 4,1 Gew.-% Produkt aus Beisp. 1 | 0,40 | 14 | 14 | 8 | 14 | 14 |
| 2,45 Gew.-% do. | 0,24 | 12 | 12 | 4 | 10 | 12 |
| 1,65 Gew.-% do. | 0,16 | 10 | 9 | 4 | 8 | 12 |
| 1,0 Gew.-% do. | 0,10 | 7 | 6 | 3 | 5 | 8 |
| 4,3 Gew.-% Produkt aus Beisp. 2 | 0,40 | 14 | 14 | 8 | 14 | 14 |
| 2,6 Gew.-% do. | 0,24 | 10 | 12 | 5 | 10 | 12 |
| 1,7 Gew.-% do. | 0,16 | 10 | 10 | 4 | 7 | 10 |
| 1,1 Gew.-% do. | 0,10 | 8 | 6 | 2 | 6 | 7 |
| 0-Proben | | | 0 völlig bewachsen | | | |

Tabelle 5 (Fortsetzung)

Auflegetest – Hemmzonen um die Proben in cm²

| Tränklösung | ≙ Gew.-% Sn | Bakterien | | |
|---|---|---|---|---|
| | | Bacillus mesentericus | Bacillus subtilis | Proteus vulgaris |
| 1,0 Gew.-% TBTO | 0,40 | 20 | 20 | 12 |
| 0,6 Gew.-% TBTO | 0,24 | 14 | 18 | 9 |
| 0,4 Gew.-% TBTO | 0,16 | 8 | 13 | 6 |
| 0,25 Gew.-% TBTO | 0,10 | 5 | 6 | 3 |
| 2,0 Gew.-% TBTL | 0,40 | 11 | 13 | 10 |
| 1,2 Gew.-% TBTL | 0,24 | 6 | 8 | 7 |
| 0,8 Gew.-% TBTL | 0,16 | 5 | 3 | 3 |
| 0,5 Gew.-% TBTL | 0,10 | 3 | 3 | 2 |
| 2,0 Gew.-% TBTN | 0,40 | 10 | 12 | 10 |
| 1,2 Gew.-% TBTN | 0,24 | 6 | 7 | 6 |
| 0,8 Gew.-% TBTN | 0,16 | 6 | 6 | 4 |
| 0,5 Gew.-% TBTN | 0,10 | 3 | 3 | 2 |
| 4,1 Gew.-% Prod. aus Beisp. 1 | 0,40 | 10 | 12 | 9 |
| 2,45 Gew.-% do. | 0,24 | 5 | 6 | 6 |
| 1,65 Gew.-% do. | 0,16 | 5 | 5 | 3 |
| 1,0 Gew.-% do. | 0,10 | 3 | 3 | 3 |
| 4,3 Gew.-% Prod. aus Beisp. 2 | 0,40 | 10 | 11 | 9 |
| 2,6 Gew.-% do. | 0,24 | 6 | 7 | 6 |
| 1,7 Gew.-% do. | 0,16 | 5 | 4 | 2 |
| 1,1 Gew.-% do. | 0,10 | 2 | 3 | 2 |
| O-Probe | | 0 | 0 | 0 |

Rezeptur-Beispiele

Beispiel 1

Eine farblose, wenig Bindemittel enthaltende Formulierung, bestehend aus:

2,5 Gew.-Teilen Reaktionsprodukt aus Beispiel 1
5 Gew.-Teilen Diäthylenglykolmonobutyläther
10 Gew.-Teilen langöliges Alkyldharz (ca. 33% Phthalatharz, ca. 67% Triglyceride pflanzlicher Fettsäuren)
82,5 Gew.-Teilen Kristallöl 60 (Benzinfraktion)
zeigt ein gutes Eindringvermögen und lässt sich sehr gut als Holzschutzgrundierung für Bauholz verwenden.

Beispiel 2

Eine farbige Holzschutz-Lasur, bestehend aus:

2,0 Gew.-Teilen Reaktionsprodukt aus Beispiel 2
40 Gew.-Teilen langöliges Alkydharz (siehe 1.)
0,5 Gew.-Teilen Sikkative (Co-, Mn-, Pb-Salze)
0,5 Gew.-Teilen Antiabsetzmittel
9,2 Gew.-Teilen Eisenoxidrotpaste
0,8 Gew.-Teilen Eisenoxidschwarzpaste
6 Gew.-Teilen Diäthylenglykolmonobutyläther
39,8 Gew.-Teilen Kristallöl 60 (Benzinfraktion)
ist geeignet zum Anstrich von masshaltigen Holzbauteilen wie Fensterrahmen, Türen usw.

Beispiel 3

Eine wasserverdünnbare Wirkstoffkombination, bestehend aus:

20 Gew.-Teilen Reaktionsprodukt aus Beispiel 3
5 Gew.-Teilen N,N'-Dimethyl-N-phenyl-N'-fluordichlormethyl-thiosulfonyl-diamid
75 Gew.-Teilen nichtionogener Emulgator

lässt sich in weiten Bereichen (1:5 bis 1:50) mit Wasser verdünnen und ergibt stabile Emulsionen zum Streichen, Spritzen oder Tauchen von z.B. frisch geschlagenem Holz. Die unverdünnte Formulierung wird in Konzentrationen von 0,2 bis 3 Gew.-% zur biziden Ausrüstung von wässrigen Anstrichsystemen, z.B. Dispersionen auf Acrylat-Basis, eingesetzt.

**Patentansprüche**

1. Tris-(triorganozinn)ester trimerer durch Polymerisation von ungesättigten natürlichen oder synthetischen einbasischen aliphatischen Säuren mit 16–22 Kohlenstoffatomen erhältlicher Fettsäuren, in denen die an das Zinn gebundenen organischen Reste gleiche oder verschiedene Reste aus der Gruppe geradkettige oder verzweigte Alkylreste mit 3–6 C-Atomen, Cyclohexyl- und Phenylreste sind.

2. Tris-(triorganozinn)ester von trimeren Fettsäuren gemäss Anspruch 1, dadurch gekennzeichnet, dass die Organylreste Butylreste sind.

3. Tris-(triorganozinn)ester gemäss den Ansprüchen 1 und 2, dadurch gekennzeichnet, dass die trimere Fettsäure aus Fettsäuren mit 18 C-Atomen erhalten worden ist.

4. Tris-(triorganozinn)ester gemäss Anspruch 3, dadurch gekennzeichnet, dass die trimere Fettsäure trimerisierte Tallölfettsäure ist.

5. Biozides Mittel, dadurch gekennzeichnet, dass es als aktiven Wirkstoff Tris-(triorganozinn)ester der trimeren Fettsäuren gemäss den Ansprüchen 1 bis 4 enthält.

6. Verwendung von Mitteln gemäss Anspruch 5 zur Bekämpfung von Bakterien, Pilzen, Algen und Unterwasserbewuchsorganismen.

7. Verwendung von Mitteln gemäss Anspruch 5 im Holzschutz zur Bekämpfung von holzschädigenden Pilzen.

## Revendications

1. Esters tris-(triorganostanniques) d'acides gras trimères qui peuvent être obtenus par polymérisation de mono-acides aliphatiques insaturés, naturels ou synthétiques, contenant de 16 à 22 atomes de carbone et dans lesquels les radicaux organiques liés à l'étain sont des radicaux, identiques ou différents, pris dans l'ensemble constitué par les radicaux alkyles linéaires ou ramifiés qui contiennent de 3 à 6 atomes de carbone, le radical cyclohexyle et le radical phényle.

2. Esters tris-(triorganostanniques) d'acides gras trimères selon la revendication 1, caractérisés en ce que les radicaux organyles sont des radicaux butyles.

3. Esters tris-(triorganostanniques) selon l'une des revendications 1 et 2, caractérisés en ce que l'acide gras trimère a été obtenu à partir d'acides gras contenant 18 atomes de carbone.

4. Esters tris-(organostanniques) selon la revendication 3, caractérisés en ce que l'acide gras trimère est le trimère de l'acide gras du tallöl.

5. Produit biocide caractérisé en ce qu'il contient, comme matière active, un ester tris-(triorganostannique) d'acide gras trimérisé selon l'une quelconque des revendications 1 et 4.

6. Application de produits selon la revendication 5 à la lutte contre des bactéries, des mycètes, des algues et des organismes qui sont à l'origine de la salissure d'objets immergés dans l'eau.

7. Application de produits selon la revendication 5 dans la protection du bois pour combattre des mycètes déprédateurs du bois.

## Claims

1. Tris(triorganotin)esters of trimeric fatty acids obtainable by polymerisation of unsaturated natural or synthetic monobasic aliphatic acids having from 16 to 22 carbon atoms, in which the organic radicals bonded to the tin atom are identical or different radicals selected from the group consisting of straight-chain or branched alkyl radicals having from 3 to 6 carbon atoms, cyclohexyl radicals and phenyl radicals.

2. Tris(triorganotin)esters of trimeric fatty acids according to claim 1, characterised in that the organyl radicals are butyl radicals.

3. Tris(triorganotin)esters according to claims 1 and 2, characterised in that the trimeric fatty acid has been obtained from fatty acids having 18 carbon atoms.

4. Tris(triorganotin) esters according to claim 3, characterised in that the trimeric fatty acid is trimerised tall oil fatty acid.

5. A biocidal agent, characterised in that in contains, as active ingredient, tris(triorganotin) esters of trimeric fatty acids according to claims 1 to 4.

6. The use of agents according to claim 5 for controlling bacteria, fungi, algae and marine growth organisms.

7. The use of agents according to claim 5 in wood preservation for controlling wood-damaging fungi.